# EUROPÄISCHE PATENTSCHRIFT

(11) **EP 2 942 114 B1**
(45) Veröffentlichungstag und Bekanntmachung des Hinweises auf die Patenterteilung: **27.02.2019**
(21) Anmeldenummer: 14167730.2
(22) Anmeldetag: 09.05.2014
(51) Int. Cl.: B07C 5/342, D01G 31/00, G01N 21/85, G01N 21/89

(54) **Verfahren zum Erkennen von Fremdkörpern**
Method for detecting foreign bodies
Procédé de reconnaissance de corps étrangers

(43) Veröffentlichungstag der Anmeldung: 11.11.2015
(73) Patentinhaber: Baumer Inspection GmbH, 78467 Konstanz (DE)
(72) Erfinder: Massen, Robert, 78337 Öhningen (DE)
(74) Vertreter: Strauss, Steffen

(56) Entgegenhaltungen:
- WO-A1-97/14955
- WO-A1-2014/206508
- US-A1- 2005 078 306

## Beschreibung

Die vorliegende Erfindung betrifft ein Verfahren zum Erkennen von Fremdkörpern in einem Teilchenstrom und eine Erkennungseinrichtung zum Erkennen von Fremdkörpern in einem Teilchenstrom.

Bei der industriellen Verarbeitung von Baumwolle und ähnlichen flocken- und faserartigen Produkten treten oft Kontaminationen durch Kunststoffe auf, wie beispielsweise Kunststoffschnüre und Kunststofffolienreste. Diese Fremdkörper stören die weiteren Verarbeitungsprozesse, wie beispielsweise das Spinnen der Baumwolle. Oftmals werden die Rohfasern pneumatisch gefördert und dabei mit Hilfe von Kamerasystemen im Flug optisch erfasst. Dabei findet eine automatische Inspektion auf Fremdkörper statt. Die detektierten Fremdkörper werden pneumatisch ausgeblasen.

Eine optische Erfassung kann mithilfe schneller Zeilenkameras oder bildgebenden Laserscannern durchgeführt werden, die den Strom im Flug abtasten. In Echtzeit werden lokale optische Differenzen der reflektierten Intensität, der Farbe, der lokalen spektralen Eigenschaften im Nahinfrarotbereich oder der lokalen Polarisation mit schnellen Bildverarbeitungs- und Klassifikationsverfahren untersucht.

Allen diesen bildpunktweise arbeitenden optischen Verfahren ist gemeinsam, dass sie aufwändige optische Bildgeber im Nahinfrarot- oder ultravioletten Spektralbereich benötigen. Oftmals werden mehrere unterschiedliche Verfahren kombiniert, wie beispielsweise eine Fluoreszenz im Ultraviolettbereich und eine reflektierte Intensität im Nahinfrarotbereich. Trotzdem kann nur eine unbefriedigende Unterscheidung zwischen den hellen Kunststofffremdkörpern und der Baumwolle erreicht werden.

Die unsichere Unterscheidung zwischen Baumwolle und Fremdkörper führt in der Regel zu einer aufwändigen Überdetektion. Aufgrund der Überdetektion werden große Mengen unkontaminierter Baumwolle fälschlicherweise aussortiert. Diese Mengen gehen für die Garnproduktion verloren oder werden aufwändig manuell nachsortiert.

Den kamerabasierten optischen Detektionsverfahren ist gemeinsam, dass die Unterscheidung zwischen Fremdkörper und Baumwolle in der ersten Detektionsstufe radiometrisch erfolgt, d.h. durch Analyse der Amplituden des reflektierten Lichtes. Der Baumwollstrom wird beispielsweise gleichmäßig mit einer Lichtquelle eines ausgewählten Spektrums beleuchtet, beispielsweise mit weißem, infrarotem oder ultraviolettem Licht. Der Baumwollstrom wird mit auf den verwendeten Wellenlängenbereich optimierten Bildsensoren beobachtet. Die primäre Erkennung des Fremdkörpers geschieht anhand des radiometrischen Unterschieds zwischen dem Fremdkörper und der Baumwolle, beispielsweise durch Erfassen schmaler Wellenlängenbereiche, bei denen sich das Reflexionsspektrum zwischen der Baumwolle und dem Fremdkörper deutlich unterscheidet. In diesen Wellenlängenbereichen wird die Amplitude oder die Leistung des reflektierten Lichtes ausgewertet.
Die Druckschrift EP 0 364 786 B1 beschreibt in diesem Zusammenhang beispielsweise ein Verfahren zur Erkennung von Fremdgut in einem Fasergutstrom in der Textilindustrie.

Die Druckschrift WO 2008/058573 A1 beschreibt beispielsweise ein Verfahren zum Erkennen und Ausscheiden von Fremdstoffen in einem pneumatisch geförderten Materialstrom von Rohbaumwolle.
Die Druckschrift WO 97/14955 A1 beschreibt beispielsweise ein Verfahren zum Erkennen von Fremdteilen in einem Baumwollflockenstrom. Dabei werden mit ein und derselben Aufnahmeeinrichtung mehrere Bilder mit unterschiedlicher Beleuchtung, wie Durchlicht und/oder Auflicht von verschiedenen Seiten und/oder aus unterschiedlichen Richtungen aufgenommen, wobei die Bilder zur Erhöhung der Erkennungssicherheit kombiniert werden.

Die Druckschrift US 2005/0078306 A1 beschreibt eine Vorrichtung in der Spinnereivorbereitung zum Erkennen von Fremdteilen aus Kunststoff in oder zwischen Faserflocken die von Textilfaserballen abgelöst sind, bei der eine Fremdteilsucheinrichtung und die Faserflocken relativ zueinander bewegbar sind, wobei die Fremdteilsucheinrichtung einen Sender und einen Empfänger für elektromagnetische Wellen bzw. Strahlen und eine Auswerteeinrichtung zur Unterscheidung der Fremdteile von den Faserflocken aufweist.

Trotz aller Fortschritte bleibt eine relativ große Unsicherheit in der Detektionsgüte bestehen, die den praktischen Einsatz von optischen Fremdstofferkennungssystemen behindert. Es besteht daher ein hohes Interesse an einer Erkennung von Fremdkörpern in Baumwolle, das mit einer höheren Treffsicherheit arbeitet und einfacher einzustellen ist als die radiometrisch arbeitenden, bildgebenden Verfahren.

Es ist die der Erfindung zugrundeliegende Aufgabe, ein Erkennen von Fremdkörpern in einem Teilchenstrom zu verbessern.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Verfahren zum optischen Erkennen von Fremdkörpern in einem Teilchenstrom gelöst, mit den Schritten eines Projizierens eines Lichtintensitätsmusters mit einer Textur aus einem kontrastreichen Hell/Dunkel-Muster auf den Teilchenstrom; eines optischen Erfassens des vom Teilchenstrom reflektierten Lichtintensitätsmusters zum Erhalten einer Texturinformation; und eines Erfassens des Fremdkörpers in dem Teilchenstrom auf Basis der Texturinformation. Dadurch wird beispielsweise der technische Vorteil erreicht, dass Fremdkörper im Teilchenstrom mit einer hohen Zuverlässigkeit erkannt und aussortiert werden können.

In einer vorteilhaften Ausführungsform des Verfahrens umfasst das Lichtintensitätsmuster eine binäre Textur. Dadurch wird beispielsweise der technische Vorteil erreicht, dass ein hoher Kontrast der Textur erreicht wird.

In einer weiteren vorteilhaften Ausführungsform des Verfahrens wird das Lichtintensitätsmuster mittels gepulster Lichtblitze auf den Teilchenstrom projiziert. Dadurch wird beispielsweise der technische Vorteil erreicht, dass eine große Helligkeit und eine geringe Bewegungsunschärfe bei der Bilderfassung erreicht werden.

In einer weiteren vorteilhaften Ausführungsform des Verfahrens werden die Lichtblitze im Takt einer Bildsensorfrequenz gepulst. Dadurch wird beispielsweise der technische Vorteil erreicht, dass die Lichtblitze synchron zur Bilderfassung gesteuert werden.

In einer weiteren vorteilhaften Ausführungsform des Verfahrens ist die Textur durch eine zufällige Verteilung von Bereichen mit einer ersten Lichtintensität und von Bereichen einer zweiten Lichtintensität gebildet. Dadurch wird beispielsweise der technische Vorteil erreicht, dass eine Bildschärfe oder eine Texturentropie auf Basis der Texturinformation bestimmt werden können.

In einer weiteren vorteilhaften Ausführungsform des Verfahrens ist das Lichtintensitätsmuster ein Schwarz-Weiß-Muster. Dadurch wird beispielsweise ebenfalls der technische Vorteil erreicht, dass ein hoher Kontrast bei der Bilderfassung erzielt wird.

In einer weiteren vorteilhaften Ausführungsform des Verfahrens weist das Lichtintensitätsmuster eine periodische Textur auf. Dadurch wird beispielsweise der technische Vorteil erreicht, dass der Fremdkörper auf Basis einer Fourier-Transformation erkannt werden kann.

In einer weiteren vorteilhaften Ausführungsform des Verfahrens wird zum Erfassen des Fremdkörpers eine lokale Entropie der Texturinformation ausgewertet. Dadurch wird beispielsweise der technische Vorteil erreicht, dass der Fremdkörper auf einfache Weise und mit geringem Rechenaufwand erfasst wird.

In einer weiteren vorteilhaften Ausführungsform des Verfahrens wird zum Erfassen des Fremdkörpers eine Texturelementgröße der Texturinformation ausgewertet. Dadurch wird beispielsweise der technische Vorteil erreicht, dass der Fremdkörper auf einfache Weise und mit geringem Rechenaufwand erfasst und in seiner Grösse bestimmt wird.

Gemäß einem zweiten Aspekt der Erfindung wird die Aufgabe durch eine Erkennungseinrichtung zum Erkennen von Fremdkörpern in einem Teilchenstrom gelöst, mit einer Projektionseinrichtung zum Projizieren eines Lichtintensitätsmusters mit einer Textur aus einem kontrastreichen Hell/Dunkel-Muster auf den Teilchenstrom; einer Bilderfassungseinrichtung zum optischen Erfassen des vom Teilchenstrom reflektierten Lichtintensitätsmusters, um eine Texturinformation zu erhalten; und einer Fremdkörpererfassungseinrichtung zum Erfassen des Fremdkörpers in dem Teilchenstrom auf Basis der Texturinformation. Dadurch werden beispielsweise die gleichen technischen Vorteile wie durch das Verfahren nach dem ersten Aspekt erreicht.

In einer vorteilhaften Ausführungsform der Erkennungseinrichtung umfasst die Projektionseinrichtung pulsartig betreibbare Leuchtdioden. Dadurch wird beispielsweise der technische Vorteil erreicht, dass das Lichtintensitätsmuster mit einer geringen Energie erzeugt werden kann.

In einer weiteren vorteilhaften Ausführungsform der Erkennungseinrichtung umfasst die Projektionseinrichtung einen Laser zum diffraktiven Erzeugen des Lichtintensitätsmusters. Dadurch wird beispielsweise der technische Vorteil erreicht, dass das Lichtmuster mit einer hohen Intensität erzeugt werden kann.

In einer weiteren vorteilhaften Ausführungsform der Erkennungseinrichtung umfasst die Erkennungseinrichtung einen absorbierenden Hintergrund zum Absorbieren des projizierten Lichtintensitätsmusters. Dadurch wird beispielsweise der technische Vorteil erreicht, dass zufällige Reflexionen des Lichtintensitätsmusters an dem Hintergrund vermieden werden.

In einer weiteren vorteilhaften Ausführungsform der Erkennungseinrichtung umfasst die Projektionseinrichtung einen Digitalprojektor zum Projizieren eines beliebigen Lichtintensitätsmusters. Dadurch wird beispielsweise der technische Vorteil erreicht, dass die Lichtintensitätsmuster je nach Anforderung variiert werden können.

In einer weiteren vorteilhaften Ausführungsform der Erkennungseinrichtung ist die Bilderfassungseinrichtung eine Farbkamera. Dadurch wird beispielsweise der technische Vorteil erreicht, dass zusätzlich zur Texturinformation eine Farbinformation zur Erkennung des Fremdkörpers ausgewertet werden kann.

Ausführungsbeispiele der Erfindung sind in den Zeichnungen dargestellt und werden im Folgenden näher beschrieben.

Es zeigen:
- Fig. 1: eine schematische Ansicht eines gleichmäßig beleuchtetem Teilchenstroms;
- Fig. 2: ein Blockdiagramm eines Verfahrens zum optischen Erkennen von Fremdkörpern;
- Fig. 3: eine schematische Ansicht eines Teilchenstroms, der mit einem Lichtintensitätsmuster in Form einer Textur bestehend aus einem zufälligem Muster von schwarz/weiss Elementen bestrahlt wird;
- Fig. 4: eine schematische Ansicht einer Erkennungseinrichtung zum optischen Erkennen von Fremdkörpern; und
- Fig. 5: eine schematische Ansicht eines Teilchenstroms, der mit einem Lichtintensitätsmuster in Form einer Textur bestehend aus einem zufälligem Muster von schwarz/weiss Elementen bestrahlt wird, in Verbindung mit dem Verlauf der lokalen Entropie H(x) und dem Verlauf der lokalen Bildschärfe S(x).

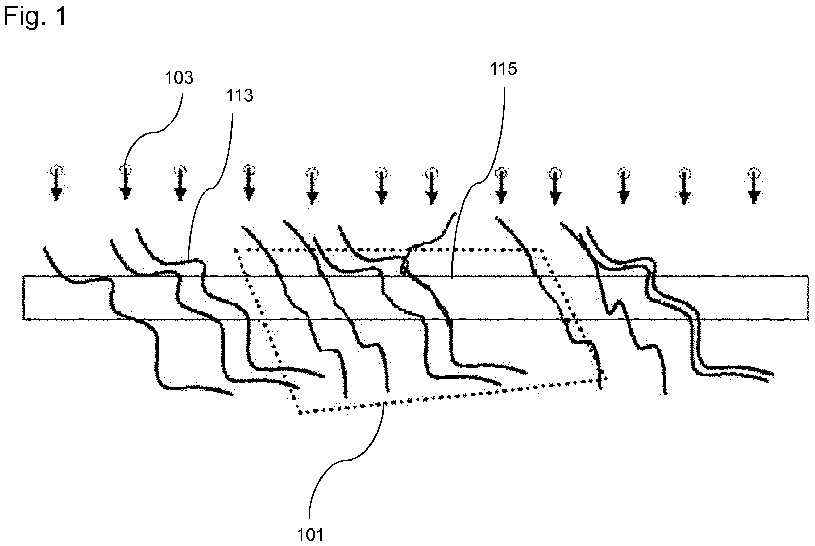

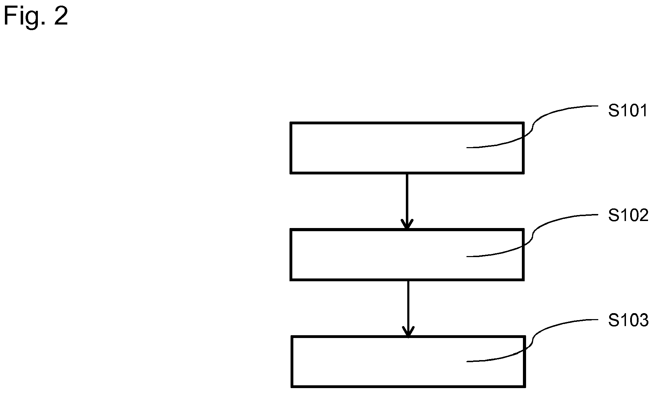

Fig. 1 zeigt eine schematische Ansicht eines gleichmäßig beleuchteten Teilchenstroms 103. Der Teilchenstrom 103 ist beispielsweise ein Strom pneumatisch geförderter Baumwolle. Der Teilchenstrom 103 umfasst weiße Baumwollfasern 113, die hell und gleichmäßig beleuchtet werden. Der Teilchenstrom 103 bewegt sich in vertikaler Richtung von oben nach unten in einer Luftströmung. Der Teilchenstrom 103 wird dabei von einer Zeilenkamera entlang der Bildzeile 115 erfasst.
In der Luftströmung wird eine flächenhafte rechteckige Kunststoffkontamination als Fremdkörper 101 mitbewegt, wie beispielsweise ein Rest einer weißen Verpackungsfolie. Die radiometrischen Unterschiede, d.h. Helligkeit und Farbe, zwischen der Baumwolle und dem Fremdkörper 101 entlang der hell beleuchtenden Bildzeile 115, die von der Zeilenkamera erfasst wird, sind gering. Infolge dieser geringen Unterschiede ist die Unterscheidung zwischen hellen Baumwollfasern 113 und dem hellen Fremdkörper 101 ebenfalls gering, so dass nur eine unsichere Erkennung des Fremdkörpers 101 erfolgt. Fig. 2 zeigt ein Blockdiagramm eines Verfahrens zum optischen Erkennen von Fremdkörpern 101, die sich in einem Teilchenstrom 103 bewegen. In einem ersten Schritt S101 wird ein Lichtintensitätsmuster mit einer Textur auf den Teilchenstrom 103 projiziert. Der Teilchenstrom 103 wird dabei beispielsweise mit räumlich hochaufgelösten, kleinteiligen und kontrastreichen Mustern als Textur beleuchtet. Dadurch wird der Teilchenstrom 103 einschließlich der Fremdkörper 101 optisch mit diesen Texturen markiert. Die projizierte Textur wird dabei so gewählt, dass sich diese beim Auftreffen auf die Fremdkörper 101 in deutlicherer und spezifischerer Weise sowohl geometrisch als auch radiometrisch verändert, als wenn diese auf die Baumwollfasern 113 trifft.
In einem zweiten Schritt S102 wird das vom Teilchenstrom 103 reflektierte Lichtintensitätsmuster mittels des Bildsensors oder der Zeilenkamera erfasst, um eine lokale Texturinformation zu erhalten. Das Lichtintensitätsmuster wird vorzugsweise stroboskopisch und zeitsynchron zum Auslesetakt einer Bildsensorfrequenz des beobachtenden Bildsensors projiziert.
In einem dritten Schritt S103 wird der Fremdkörper 101 in dem Teilchenstrom 103 auf Basis der lokalen Texturinformation erfasst. Die Erkennung des Fremdkörpers 101 erfolgt durch eine Auswertung einer Texturveränderung, die in der Texturinformation vorliegt. Dies kann mit dem Verfahren der numerischen Texturanalyse an den Bildsensorsignalen des Bildsensors durchgeführt werden, der den Teilchenstrom 103 beobachtet. Typische örtliche Texturmerkmale sind die lokale Entropie, der lokale Kontrast, die lokale Bildschärfe usw. welche mit den Verfahren der Bildverarbeitung aus den Signalen des Bildsensors bestimmt werden.

Dadurch wird erreicht, dass die Erkennung von Fremdkörpern 101 im Teilchenstrom 103 durch eine Kombination einer optischen Projektion einer kontrastierenden, fein gemusterten Textur als Beleuchtung des Teilchenstroms 103 und der nachfolgenden Texturanalyse der projizierten Textur auf dem Teilchenstrom 103 durchgeführt wird.

Die Texturanalyse, d.h. die Veränderung der geometrischen Textur bei der Reflektion an einem Fremdkörper 101 im Vergleich zum Auftreffen auf Baumwollfasern 113, kann im Gegensatz zu radiometrisch arbeitenden Verfahren robust gegenüber Leistungs- und Amplitudenänderungen durchgeführt werden. Dadurch wird die Einstellung der Detektionsschwellen erleichtert und eine Überdetektion verhindert. Lokale Textureigenschaften, wie beispielsweise die Bildschärfe, die Texturverformung oder die Texturentropie, können über einen weiten Bereich von Helligkeiten und Farben ohne kritische Schwellen gemessen werden. Dadurch wird eine zuverlässige Erkennung von Fremdkörpern 101 durch strukturierte Beleuchtung und Texturanalyse erreicht.

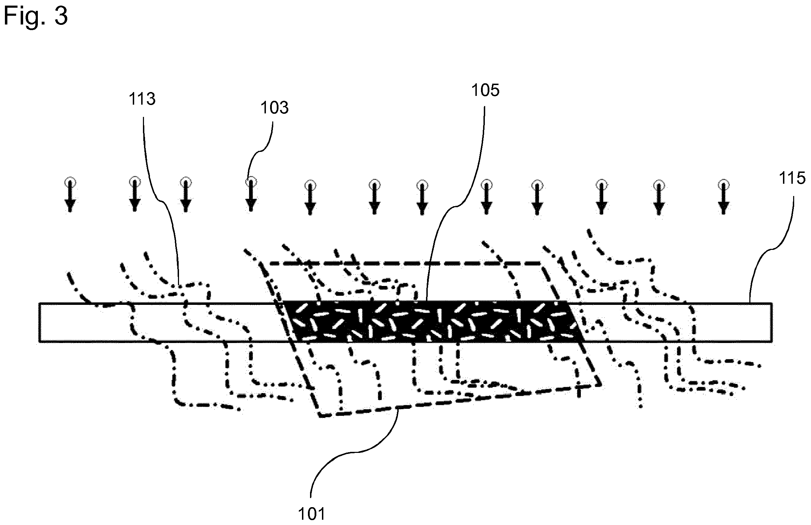

Fig. 3 zeigt eine schematische Ansicht des Teilchenstroms 103, der mit einem Lichtintensitätsmuster 105 mit einer Textur bestrahlt wird. Der Teilchenstrom 103 einschließlich des flächenhaften Fremdkörpers 101 wird hierbei nicht gleichmäßig hell entlang der abtasteten Bildzeile 115 beleuchtet, sondern mit einem Lichtintensitätsmuster 105 mit einer Textur aus einem kontrastreichen Hell/Dunkel-Muster. Die Textur besteht beispielsweise aus kleinen zufällig orientierten hellen kurzen Strichen.

Beim Auftreffen auf die feinen Baumwollfasern 113 wird diese Textur wegen des geringen Faserquerschnittes, der das Lichtintensitätsmuster 105 zurückwirft, kaum sichtbar auf den Bildsensor abgebildet. Beim Auftreffen auf den flächigen Fremdkörper 101 wird die projizierte Textur hingegen sichtbar und von dem Bildsensor als intensive Hell/Dunkel-Textur deutlich bildhaft erfasst. Dadurch ist der Fremdkörper 101 sicher detektierbar.

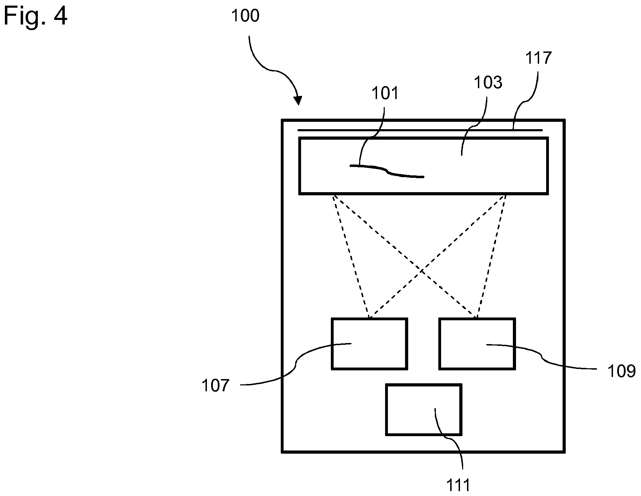

Fig. 4 zeigt eine schematische Ansicht einer Erkennungseinrichtung 100 zum optischen Erkennen von Fremdkörpern 101. Die Erkennungseinrichtung 100 umfasst eine Projektionseinrichtung 107 zum Projizieren des Lichtintensitätsmusters 105 mit der Textur auf den Teilchenstrom 103. Weiter umfasst die Erkennungseinrichtung 100 eine Bilderfassungseinrichtung 109 zum optischen Erfassen des vom Teilchenstrom 103 reflektierten Lichtintensitätsmusters 105, um eine Texturinformation zu erhalten und eine Fremdkörpererfassungseinrichtung 111 zum Erfassen des Fremdkörpers 101 in dem Teilchenstrom 103 auf Basis der Texturinformation.

Die Projektionseinrichtung 107 kann durch pulsartig betreibbare Leuchtdioden zur Texturerzeugung durch gepulste LED-Beleuchtung, einen Laser zum diffraktiven Erzeugen des Lichtintensitätsmusters 105 oder einen Digitalprojektor zum Projizieren eines beliebigen Lichtintensitätsmusters 105 gebildet sein. Die Erkennungseinrichtung 100 umfasst einen absorbierenden Hintergrund 117 zum Absorbieren des projizierten Lichtintensitätsmusters 105.

Die Bilderfassungseinrichtung 109 ist beispielsweise eine Farbkamera mit einem Bildsensor, dessen Daten an die Fremdkörpererfassungseinrichtung 111 übermittelt werden. Die Fremdkörpererfassungseinrichtung 111 kann durch einen Prozessor gebildet werden, der die Daten des Bildsensors auswertet, die die Texturinformation über die reflektierte Textur auswertet.

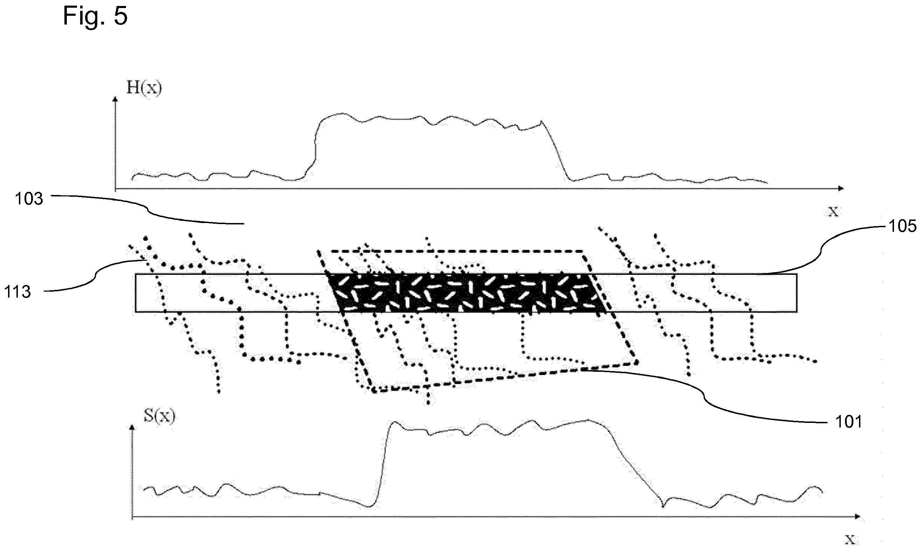

Fig. 5 zeigt eine schematische Ansicht eines Teilchenstroms 103, der mit einem Lichtintensitätsmuster 105 bestrahlt wird, in Verbindung mit einer lokalen Entropie und Texturelementgröße. Anhand der projizierten, fein gemusterten und kontrastreichen Textur wird ersichtlich, wie sich die reflektierte Textur beim Auftreffen auf den flächigen Fremdkörper 101 verändert. Die projizierte Textur zerfällt optisch auf den einzelnen Baumwollfasern 113. Auf dem flächigen Fremdkörper 101 tritt hingegen die projizierte Textur deutlich hervor. Der Teilchenstrom 103 wird beispielsweise gegen einen dunklen Hintergrund betrachtet und von vorne mit einer feingliedrigen Schwarz-Weiß-Textur beleuchtet. Diese Beleuchtung lässt sie Baumwollfasern 113 nur an wenigen Stellen erkennen während an der flächigen Kontamination die projizierte Textur gut sichtbar wird.

Die Veränderung der Textur ist unabhängig von der rückgestreuten Lichtleistung durch den Bildsensor gut messbar. Die Textureigenschaften, wie beispielsweise eine lokale Bildschärfe S(x), eine lokale Entropie H(x) oder lokale Histogramme können durch Texturoperatoren auf einfache Weise erfasst werden.

Die Erkennung des Fremdkörpers 101 kann beispielsweise durch die Berechnung der lokalen Entropie H(x) in der Texturinformation entlang des beleuchteten Ausschnittes erfolgen, der von dem Bildsensor beobachtet wird. Die Erkennung des Fremdkörpers 101 kann ebenfalls durch die Berechnung der Bildschärfe S(x) eines Texturelements im Bereich der Baumwollfasern 113 (kleines S(x)) im Vergleich zur Größe S(x) im Bereich des flächigen Fremdkörpers 101 (großes S(x)) erfolgen. Dadurch kann eine Trennung zwischen dem Fremdkörper 101 als Schlecht-Teilchen und den Baumwollfasern 113 als Gut-Teilchen mit Hilfe von Texturoperatoren an Bildsignalen oder -daten durchgeführt werden, die von dem Bildsensoren geliefert werden. Die lokalen Textureigenschaften lassen sich zwischen Gut- und Schlecht-Teilchen klassifizieren und unterscheiden.

Das erfindungsgemäße Verfahren zum optischen Erkennen von Fremdkörpern 101 in dem Teilchenstrom 103 kann mit radiometrisch ausgelegten Verfahren kombiniert werden. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

## Patentansprüche

1. Verfahren zum optischen Erkennen von Fremdkörpern (101) in einem Teilchenstrom (103) von flocken- und faserartigen Produkten, insbesondere von Baumwolle, wobei ein oder mehrere Fremdkörper (101) und der Teilchenstrom (103) in einer Luftströmung bewegt werden, mit den Schritten:
- Projizieren (S101) eines Lichtintensitätsmusters (105) mit einer Textur, wobei das Lichtintensitätsmusters (105) mit der Textur aus einem kontrastreichen Hell / Dunkel - Muster besteht, auf den Teilchenstrom (103) und die Fremdkörper (101), wobei die projizierte Textur so gewählt wird, dass diese sich beim Auftreffen auf die Fremdkörper (101) in deutlicherer und spezifischerer Weise sowohl geometrisch als auch radiometrisch verändert, als wenn diese auf den Teilchenstrom (103) trifft;
- optisches Erfassen (S102) des vom Teilchenstrom (103) und den Fremdkörpern (101) reflektierten Lichtintensitätsmusters zum Erhalten einer lokalen Texturinformation und
- Erfassen (S103) der Fremdkörper (101) in dem Teilchenstrom (103) durch eine Auswertung von Texturveränderungen an den Fremdkörpern (101) relativ zum Teilchenstrom (103), welche in der optisch erfassten lokalen Texturinformation vorliegen.

2. Verfahren nach Anspruch 1, wobei das Lichtintensitätsmuster (105) eine binäre Textur umfasst.

3. Verfahren nach einem der vorangehenden Ansprüche, wobei das Lichtintensitätsmuster (105) mittels gepulster Lichtblitze auf den Teilchenstrom (103) projiziert wird.

4. Verfahren nach Anspruch 3, wobei die Lichtblitze im Takt einer Bildsensorfrequenz gepulst werden.

5. Verfahren nach einem der vorangehenden Ansprüche, wobei die Textur durch eine zufällige Verteilung von Bereichen mit einer ersten Lichtintensität und von Bereichen einer zweiten Lichtintensität gebildet ist.

6. Verfahren nach einem der vorangehenden Ansprüche, wobei das Lichtintensitätsmuster (105) ein Schwarz-Weiß-Muster ist.

7. Verfahren nach einem der vorangehenden Ansprüche, wobei das Lichtintensitätsmuster (105) eine periodische Textur aufweist.

8. Verfahren nach einem der vorangehenden Ansprüche, wobei zum Erfassen des Fremdkörpers (101) eine lokale Entropie der Texturinformation ausgewertet wird.

9. Verfahren nach einem der vorangehenden Ansprüche, wobei zum Erfassen des Fremdkörpers (101) eine lokale Texturelementgröße in der Texturinformation ausgewertet wird.

10. Erkennungseinrichtung (100) zum optischen Erkennen von Fremdkörpern (101) in einem Teilchenstrom (103) von flocken- und faserartigen Produkten, insbesondere von Baumwolle, wobei der Teilchenstrom (103) und die Fremdkörper (101) in einer Luftströmung bewegt werden, mit:
- einer Projektionseinrichtung (107) zum Projizieren eines Lichtintensitätsmusters (105) mit einer Textur auf den Teilchenstrom (103) und die Fremdkörper (101),
- wobei das Lichtintensitätsmusters (105) mit der Textur aus einem kontrastreichen Hell / Dunkel - Muster besteht,
- wobei die projizierte Textur so gewählt wird, dass diese sich beim Auftreffen auf die Fremdkörper (101) in deutlicherer und spezifischerer Weise sowohl geometrisch als auch radiometrisch verändert, als wenn diese auf den Teilchenstrom (103) trifft;
- einer Bilderfassungseinrichtung (109) zum optischen Erfassen des vom Teilchenstrom (103) und den Fremdkörpern (101) reflektierten Lichtintensitätsmusters (105), um eine Texturinformation zu erhalten und
- einer Fremdkörpererfassungseinrichtung (111) zum Erfassen des Fremdkörpers (101) in dem Teilchenstrom (103) auf Basis der Texturinformation.

11. Erkennungseinrichtung (100) nach Anspruch 10, wobei die Projektionseinrichtung (107) pulsartig betreibbare Leuchtdioden umfasst.

12. Erkennungseinrichtung (100) nach Anspruch 10 oder 11, wobei die Projektionseinrichtung (107) einen Laser zum diffraktiven Erzeugen des Lichtintensitätsmusters (105) umfasst.

13. Erkennungseinrichtung (100) nach einem der Ansprüche 10 bis 12, wobei die Erkennungseinrichtung (107) einen absorbierenden Hintergrund (117) zum Absorbieren des projizierten Lichtintensitätsmusters (105) umfasst.

14. Erkennungseinrichtung (100) nach einem der Ansprüche 10 bis 13, wobei die Projektionseinrichtung (107) einen Digitalprojektor zum Projizieren eines beliebigen Lichtintensitätsmusters (105) umfasst.

15. Erkennungseinrichtung (101) nach einem der Ansprüche 10 bis 14, wobei die Bilderfassungseinrichtung (109) eine Farbkamera ist.

## Claims

1. Procedure for the optical detection of foreign bodies (101) in a particle stream (103) of flaky and fibrous products, in particular of cotton, whereby one or more foreign bodies (101) and the particle stream (103) are moved in an air stream, with the steps:
- Projection (S101) of a light intensity pattern (105) with a texture, whereby the light intensity pattern (105) with the texture consists of a high-contrast light/dark pattern, onto the particle stream (103) and the foreign bodies (101), whereby the projected texture is selected in such a way that it changes both geometrically and radiometrically in a more distinct and specific manner when it strikes the foreign bodies (101) than when it strikes the particle stream (103);
- optical detection (S102) of the light intensity pattern reflected by the particle stream (103) and the foreign bodies (101) to obtain local texture information, and
- detection (S103) of the foreign bodies (101) in the particle stream (103) through the evaluation of texture changes in the foreign bodies (101) relative to the particle stream (103), said changes being present in the optically detected local texture information.

2. Procedure in accordance with Claim 1, whereby the light intensity pattern (105) comprises a binary texture.

3. Procedure in accordance with any one of the preceding claims, whereby the light intensity pattern (105) is projected onto the particle stream (103) by means of pulsed light flashes.

4. Procedure in accordance with Claim 3, whereby the light flashes are pulsed in time with an image sensor frequency.

5. Procedure in accordance with any one of the preceding claims, whereby the texture is formed by a random distribution of areas having a first light intensity and areas having a second light intensity.

6. Procedure in accordance with any one of the preceding claims, whereby the light intensity pattern (105) is a black-and-white pattern.

7. Procedure in accordance with any one of the preceding claims, whereby the light intensity pattern (105) has a periodic texture.

8. Procedure in accordance with any one of the preceding claims, whereby a local entropy of the texture information is evaluated to detect the foreign body (101).

9. Procedure in accordance with any one of the preceding claims, whereby a local texture element quantity in the texture information is evaluated to detect the foreign body (101).

10. Detection device (100) for the optical detection of foreign bodies (101) in a particle stream (103) of flaky and fibrous products, in particular of cotton, whereby the particle stream (103) and the foreign bodies (101) are moved in an air stream, with:
- a projection device (107) for projecting a light intensity pattern (105) with a texture onto the particle stream (103) and the foreign bodies (101),
- whereby the light intensity pattern (105) with the texture consists of a high-contrast light/dark pattern,
- whereby the projected texture is selected in such a way that it changes both geometrically and radiometrically in a more distinct and specific manner when it strikes the foreign bodies (101) than when it strikes the particle stream (103);
- an image detection device (109) for the optical detection of the light intensity pattern (105) reflected by the particle stream (103) and the foreign bodies (101) to obtain texture information, and
- a foreign body detection device (111) for detecting the foreign body (101) in the particle stream (103) on the basis of the texture information.

11. Detection device (100) in accordance with Claim 10, whereby the projection device (107) comprises pulsed light emitting diodes.

12. Detection device (100) in accordance with Claim 10 or 11, whereby the projection device (107) comprises a laser for the diffractive generation of the light intensity pattern (105).

13. Detection device (100) in accordance with any one of Claims 10 to 12, whereby the detection device (107) comprises an absorbent background (117) for absorbing the projected light intensity pattern (105).

14. Detection device (100) in accordance with any one of Claims 10 to 13, whereby the projection device (107) comprises a digital projector for projecting any light intensity pattern (105).

15. Detection device (101) in accordance with any one of Claims 10 to 14, whereby the image detection device (109) is a color camera.

## Revendications

1. Procédure pour reconnaître des corps étrangers (101) dans un courant corpusculaire (103) de produits en forme de flocons et de fibres, en particulier du coton, un ou plusieurs corps étrangers (101) et le courant corpusculaire (103) étant déplacés dans le flux d'air.
- Projection (S101) d'un modèle d'intensité lumineuse (105) avec une texture, le modèle d'intensité lumineuse (105) avec la texture étant composé d'un modèle clair / foncé fortement contrasté, sur le courant corpusculaire (103) et les corps étrangers (101), la texture projetée étant choisie de manière à ce qu'elle se modifie de manière plus nette et plus spécifique aussi bien géométriquement que radiométriquement lorsqu'elle rencontre les corps étrangers (101) que lorsqu'elle rencontre le courant corpusculaire (103) ;
- détection optique (S102) du modèle d'intensité lumineuse réfléchi par le courant corpusculaire (103) et les corps étrangers (101) pour conserver une information locale sur la texture et
- détection (S103) des corps étrangers (101) dans le courant corpusculaire (103) par une évaluation des modifications de la texture des corps étrangers (101) par rapport au courant corpusculaire (103) qui sont présentes dans l'information locale sur la texture saisie de manière optique.

2. Procédure selon la revendication 1, le modèle d'intensité lumineuse (105) comportant une texture binaire.

3. Procédure selon l'une des revendications précédentes, le modèle d'intensité lumineuse (105) étant projeté au moyen d'éclairs de lumière pulsés sur le courant corpusculaire (103).

4. Procédure selon la revendication 3, les éclairs de lumière étant pulsés à la cadence d'une fréquence d'un capteur d'images.

5. Procédure selon l'une des revendications précédentes, la texture étant formée par une répartition aléatoire de zones avec une première intensité lumineuse et de zones avec une deuxième intensité lumineuse.

6. Procédure selon l'une des revendications précédentes, le modèle d'intensité lumineuse (105) étant un modèle noir et blanc.

7. Procédure selon l'une des revendications précédentes, le modèle d'intensité lumineuse (105) présentant une texture périodique.

8. Procédure selon l'une des revendications précédentes, une entropie locale de l'information sur la texture étant évaluée pour la détection du corps étranger (101).

9. Procédure selon l'une des revendications précédentes, une taille locale de l'élément de la texture étant évaluée dans l'information sur la texture pour la détection du corps étranger (101).

10. Dispositif de détection (100) pour la détection optique de corps étrangers (101) dans un courant corpusculaire (103) de produits en forme de flocons et de fibres, en particulier du coton, le courant corpusculaire (103) et les corps étrangers (101) étant déplacés dans un flux d'air avec :
- un dispositif de projection (107) pour projeter un modèle d'intensité lumineuse (105) avec une texture sur le courant corpusculaire (103) et les corps étrangers (101),
- le modèle d'intensité lumineuse (105) avec la texture étant composé d'un modèle clair / foncé fortement contrasté,
- la texture projetée étant choisie de manière à ce qu'elle se modifie aussi bien géométriquement que radiométriquement de manière plus nette et plus spécifique lorsqu'elle rencontre les corps étrangers (101) que lorsqu'elle rencontre le courant corpusculaire (103) ;
- un dispositif de capture d'image (109) pour la capture optique du modèle d'intensité lumineuse réfléchi par le courant corpusculaire (103) et les corps étrangers (101) pour conserver une information sur la texture et
- un dispositif de détection des corps étrangers (111) pour la détection du corps étranger (101) dans le courant corpusculaire (103) sur la base de l'information sur la texture.

11. Dispositif de détection (100) selon la revendication 10, le dispositif de projection (107) comportant des diodes lumineuses actionnables par des impulsions.

12. Dispositif de détection (100) selon la revendication 10 ou 11, le dispositif de projection (107) comportant un laser pour la génération diffractive du modèle d'intensité lumineuse (105).

13. Dispositif de détection (100) selon l'une des revendications 10 à 12, le dispositif de projection (107) comportant un arrière-plan (117) absorbant pour absorber le modèle d'intensité lumineuse (105) projeté.

14. Dispositif de détection (100) selon l'une des revendications 10 à 13, le dispositif de projection (107) comportant un projecteur numérique pour projeter un modèle d'intensité lumineuse (105) quelconque.

15. Dispositif de détection (101) selon l'une des revendications 10 à 14, le dispositif de capture d'images (109) étant une caméra couleur.
